# EUROPÄISCHE PATENTSCHRIFT

(11) **EP 2 111 943 B1**
(45) Veröffentlichungstag und Bekanntmachung des Hinweises auf die Patenterteilung: **27.10.2010**
(21) Anmeldenummer: 09156633.1
(22) Anmeldetag: 30.03.2009
(51) Int. Cl.: B23K 20/12, F01D 5/06

(54) **Verfahren zur Herstellung von Turbinen- oder Kompressorrotoren für Gasturbinentriebwerke durch Verwendung des kreisförmigen Reibschweissens**
Method of fabrication of turbine and compressor rotors for gas turbine engines using orbital friction welding
Méthode de fabrication de rotors de turbines ou de compresseurs pour des turbines à gaz utilisant le soudage par friction orbital

(30) Priorität: 24.04.2008 DE 102008020624
(43) Veröffentlichungstag der Anmeldung: 28.10.2009
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE)

(56) Entgegenhaltungen:
- GB-A- 1 293 531
- US-A- 4 984 730
- US-A- 5 813 593
- US-A- 6 145 730
- US-A1- 2003 190 964
- US-A1- 2006 213 953

## Beschreibung

Die Erfindung betrifft ein Verfahren zur Herstellung von zwei- oder mehrstufigen Turbinen- oder Kompressorrotoren für Gasturbinentriebwerke gemäß dem Oberbegriff des Anspruchs 1 (siehe, z.B., US 2003/190 964 A).

Zwei- oder mehrstufige Turbinen- oder Kompressorrotoren von Gasturbinentriebwerken bestehen üblicherweise aus zwei oder mehreren vorgefertigten, eine integrale oder separat montierbare Beschaufelung aufweisenden Rotorscheiben aus hochwarmfesten Werkstoffen wie Nickel-, Titan- oder Eisenbasislegierungen. Entsprechend der jeweiligen Belastung werden in ein und derselben Rotortrommel auch Rotorscheiben aus unterschiedlichen Legierungen miteinander verbunden. Das Aneinanderfügen der Rotorscheiben erfolgt bekanntermaßen mittels Schraubverbindungen. Dieses Verfahren ist jedoch zum einen wegen des durch die Verbindungselementen bedingten erhöhten Gewichts und zum anderen wegen des hohen Aufwands zur Herstellung der Presspassungen an der Verbindungsstelle und zur Montage der Rotorscheiben und schließlich zur Beseitigung von Unwuchten nachteilig.

In der DE 10348424A1 wird die Herstellung von aus mehreren miteinander verschweißten Rotorscheiben bestehenden Triebwerkstrommeln beschrieben. Der Anfangs- und Endpunkt einer durch Elektronenstrahlschweißen hergestellten Schweißnaht stellt jedoch eine Schwachstelle in der Schweißverbindung dar, durch die deren Lebensdauer verringert wird. Zudem kann es beim Schweißen aufgrund unterschiedlicher Werkstoffe und unterschiedlichen Dehnungsverhaltens zur Rissbildung kommen, so dass die erforderliche mechanische Festigkeit nicht gewährleistet ist. Die Qualität der Schweißnähte zwischen den einzelnen Rotorscheiben ist jedoch maßgeblich für die mechanischen Eigenschaften der gesamten Triebwerkstrommel.

Es wurde auch schon vorgeschlagen, die Rotorscheiben durch Rotationsreibschweißen miteinander zu verbinden, jedoch bereitet die erfolgreiche Anwendung dieses Verfahrens aufgrund der nicht beherrschbaren Unwuchten und der daraus resultierenden ungenügenden Ausrichtung der miteinander verbundenen Bauteile zueinander Schwierigkeiten. Zudem ist der apparative Aufwand infolge der bei der großen Masse der Rotorscheiben erforderlichen großen Kräfte hoch.

Der Erfindung liegt die Aufgabe zugrunde, ein kostengünstiges Verfahren zur Herstellung von aus miteinander verschweißten Rotorscheiben bestehenden Triebwerkstrommeln anzugeben, das eine hohe Qualität der Schweißverbindung und eine exakte, gewuchtete Ausrichtung der miteinander verschweißten Rotorscheiben zueinander gewährleistet.

Erfindungsgemäß wird die Aufgabe mit einem Verfahren gemäß den Merkmalen des Patentanspruchs 1 gelöst. Vorteilhafte Weiterbildungen der Erfindung sind Gegenstand der Unteransprüche.

Der Grundgedanke der Erfindung besteht mit anderen Worten darin, dass die Fügeflächen der miteinander zu verschweißenden Rotorscheiben aufeinander eine kreisende Bewegung ausführen und dabei erwärmt werden und nach Erreichen eines teigigen Zustands, wenn beide Fügeflächen wieder in Ruhe und axial zueinander ausgerichtet sind, miteinander verschweißen. Die kreisende Bewegung ist hier keine Eigenrotation der Rotorscheibe(n), sondern vielmehr bewegt sich die Achse der Rotorscheibe(n) auf einer Kreisbahn. In der Erwärmungsphase wird die Kreisbewegung der Rotorscheiben optisch erfasst, um die Vorrichtung während der Erwärmungsphase zu wuchten und eine gleichmäßige und vollständige Erwärmung beider Fügebereiche und im Stillstand der beiden Fügeflächen am Ende der Erwärmung eine genaue axiale Ausrichtung der beiden Rotorscheiben zueinander zu bewirken. Das mit geringem Vorrichtungsaufwand kostengünstig durchführbare Verfahren schafft Schweißverbindungen von hoher Qualität und Lebensdauer. Die gewuchtete kreisförmige Bewegung sorgt für eine gleichmäßige Ausbildung der Schweißverbindung und genau in einer Achse liegende Rotorscheiben und gewuchtete Triebwerkstrommeln.

In Ausgestaltung der Erfindung kann die Kreisbewegung von nur einer Rotorscheibe oder von beiden Rotorscheiben ausgeführt werden. Um Antriebskräfte und Unwuchten gering zu halten, befindet sich während der Erwärmung vorzugsweise das schwerere, das heißt das aus bereits miteinander verschweißten Rotorscheiben bestehende Bauteil in Ruhe und nur die leichtere - anzuschweißende - Rotorscheibe führt die kreisförmige Bewegung aus. Wenn beide Rotorscheiben die kreisende Bewegung ausführen, ist die Bewegung vorzugsweise gleichsinnig und vorzugsweise um 180° versetzt.

In weiterer Ausgestaltung der Erfindung können die Drehgeschwindigkeit und/oder der Radius des Bewegungskreises und/oder die auf die Fügeflächen wirkenden Reibungskräfte variiert werden, und zwar in Abhängigkeit von den Werkstoffen sowie der Größe und/oder der Masse der zu verbindenden Rotorscheiben. Die Bewegungsparameter können sowohl bei den beiden zu verbindenden Rotorscheiben jeweils unterschiedlich sein oder sie können bei verschiedenen Trommelausführungen variieren.

Das Verfahren kann zur Herstellung von Triebwerkstrommeln aus verschiedenen Werkstoffen, insbesondere für Trommeln aus Nickel-, Titan- oder Eisenbasislegierungen eingesetzt werden. Entsprechend der thermischen Belastung können aber auch in ein und derselben Triebwerkstrommel Rotorscheiben aus unterschiedlichen Werkstoffen miteinander verschweißt werden.

Die Erfindung wird nachfolgend in einem Ausführungsbeispiel zur Herstellung einer zwei miteinander verschweißte Rotorscheiben umfassenden zweistufigen Triebwerkstrommel für eine Hochdruckturbine näher erläutert. Die beiden Rotorscheiben bestehen entsprechend der in der jeweiligen Turbinenstufe unterschiedlichen Wärmebelastung aus unterschiedlichen Titanbasislegierungen, hier beispielsweise Ti 6246 und Ti 6242. Es können jedoch auch andere Titan-, Nickel- oder Eisenbasislegierungen miteinander kombiniert und verschweißt werden.

Die beiden Rotorscheiben werden jeweils in eine kleinste kreisförmige Bewegungen ausführende Schwingvorrichtung eingespannt und mit den Fügeflächen aneinander gedrückt. Die bei den hier zu verbindenden großflächigen und vergleichsweise schweren Rotorscheiben erforderliche - jeweils mit Hilfe von optischen Meßmethoden unter Einsatz von Ausgleichsgewichten - gewuchtete Drehschwingbewegung der beiden Rotorscheiben ist gleichsinnig, jedoch um 180° zueinander versetzt. Durch die aufgrund der kreisförmigen Bewegung relativ großflächige Reibung an den beiden Fügeflächen erwärmt sich das Material beider Rotorscheiben in der Fügeebene bei nur geringem Druck relativ rasch und in allen Bereichen gleichmäßig. Sobald die Werkstoffe ausgehend von der Fügeebene in einer bestimmten Dicke einen teigigen Zustand erreicht haben, wird die kreisförmige Schwingbewegung unterbrochen, so dass die beiden Rotorscheiben wieder in einer Achse zueinander ausgerichtet sind und sich in dem erreichten plastischen Zustand der Materialoberflächen - im Wesentlichen ohne Wulstbildung - miteinander verbinden.

Es ist aber auch möglich, dass nur eine der beiden Rotorscheiben - beispielsweise bei erhöhter Drehgeschwindigkeit - die kreisende Bewegung ausführt, während die andere Rotorscheibe fest eingespannt ist und sich nicht bewegt. Diese Verfahrensvariante wird insbesondere dann angewendet, wenn an ein schwereres, beispielsweise aus zwei oder mehreren bereits miteinander verschweißten Rotorscheiben bestehendes Bauteil eine einzelne, leichte Rotorscheibe angeschweißt werden soll, um den Aufwand für den Antrieb und das Auswuchten der Maschine gering zu halten.

## Patentansprüche

1. Verfahren zur Herstellung von zwei oder mehrstufigen Turbinen- oder Kompressorrotoren für Gasturbinentriebwerke, bei dem vorgefertigte Rotorscheiben an seitlich aneinander liegenden Fügeflächen miteinander verschweißt werden, wobei die Fügeflächen der miteinander zu verbindenden Rotorscheiben in Flächenkontakt gebracht werden **dadurch gekennzeichnet, dass** mindestens eine der beiden in einer angetriebenen Vorrichtung gehaltenen Rotorscheiben in eine kreisende Bewegung versetzt wird und die Fügebereiche durch die Reibungswärme bis zum Erreichen eines teigigen Zustands erwärmt werden, wobei die Kreisbewegung der Rotorscheibe(n) optisch erfasst und eine durch Unwucht bedingte Abweichung von der Kreisbewegung durch Gewichtsausgleich an der Vorrichtung korrigiert wird, und die beiden Fügeflächen in teigigem Zustand der beiderseitigen Fügebereiche sowie in ruhender Lage und zueinander axialer Ausrichtung miteinander verschweißen.

2. Verfahren nach Anspruch 1, **dadurch gekennzeichnet, dass** eine beiderseitige Kreisbewegung der zu verbindenden Rotorscheiben in einem bestimmten Kreiswinkel zueinander versetzt und in gleichem Drehsinn durchgeführt wird.

3. Verfahren nach Anspruch 1, **dadurch gekennzeichnet, dass** die Drehgeschwindigkeit und/oder der Radius des Bewegungskreises und/oder die an den Fügeflächen wirksamen Reibungskräfte in Abhängigkeit von der Größe oder Masse und dem/den Werkstoff/en der miteinander zu verbindenden Rotorscheiben variabel ist.

4. Verfahren nach Anspruch 1, **dadurch gekennzeichnet, dass** die Rotorscheibe mit der geringeren Masse in eine kreisende Bewegung versetzt und eine Rotorscheibe oder mehrere miteinander verbundene Rotorscheiben mit einer größeren Masse in ruhender Lage gehalten werden.

5. Verfahren nach Anspruch 4, **dadurch gekennzeichnet, dass** die auf der ruhenden Fügefläche eine kreisende Bewegung ausführende Fügefläche zur Vergrößerung der Relativbewegung zwischen den beiden Fügeflächen mit erhöhter Drehgeschwindigkeit und/oder in einem größeren Radius bewegt wird.

6. Verfahren nach Anspruch 1, **dadurch gekennzeichnet, dass** die Rotorscheiben aus gleichen Werkstoffen bestehen oder entsprechend einer sich in aufeinander folgenden Verdichter- oder Turbinenstufen ändernden thermischen Belastung Rotorscheiben aus unterschiedlichen Werkstoffen miteinander verschweißt werden.

7. Verfahren nach Anspruch 6, **dadurch gekennzeichnet, dass** aus Nickel-, Titan- oder Eisenbasislegierungen bestehende Rotorscheiben miteinander verschweißt werden.

## Claims

1. Method for the manufacture of two or multi-stage turbine or compressor rotors for gas-turbine engines, in which pre-fabricated rotor disks are welded to each other on laterally abutting joining surfaces, with the joining surfaces of the rotor disks to be joined being brought into areal contact, **characterized in that** at least one of the two rotor disks held in a driven fixture is set in a circular movement and the joining areas are heated by friction until they reach a pasty state, with the circular movement of the rotor disk(s) being optically recorded and a deviation from circularity due to imbalance being corrected by weight compensation at the fixture, and with the two joining surfaces immobilized and axially aligned relative to each other being welded together in pasty state of the joining areas on both sides.

2. Method in accordance with Claim 1, **characterized in that** both-side circular movement of the rotor disks to be joined is performed co-directionally, but offset to each other by a certain circular angle.

3. Method in accordance with Claim 1, **characterized in that** the rotary speed and/or the radius of the circle of movement and/or the frictional forces acting upon the joining surfaces are variable in dependence of the size or mass and the material(s) of the rotor disks to be joined.

4. Method in accordance with Claim 1, **characterized in that** the rotor disk with less mass is set in a circular movement and the rotor disk (or several rotor disks joined together) with more mass is held at rest

5. Method in accordance with Claim 4, **characterized in that** the joining surface performing a circular movement on the immobilized joining surface is moved at increased rotary speed and/or increased radius to enhance the relative movement between the two joining surfaces.

6. Method in accordance with Claim 1, **characterized in that** the rotor disks are made of the same materials or **in that** rotor disks of different materials are welded together in accordance with the thermal loading varying in subsequent compressor or turbine stages.

7. Method in accordance with Claim 6, **characterized in that** rotor disks made of nickel, titanium or iron-base alloys are welded together.

## Revendications

1. Procédé de fabrication de rotors de turbine ou de compresseur bi- ou polyétagés pour moteurs à turbine à gaz, dans lequel des disques de rotor préfabriqués sont soudés ensemble sur des surfaces d'assemblage situées latéralement l'une contre l'autre, les surfaces d'assemblage des disques de rotor à assembler étant amenées en contact surfacique, **caractérisé en ce qu'**au moins l'un des deux disques de rotor maintenu dans un dispositif entraîné est mis en mouvement circulaire et que les zones d'assemblage sont chauffées par la chaleur de friction jusqu'à atteindre un état pâteux, sachant que la rotation du/des disque(s) de rotor est saisie optiquement et qu une anomalie de rotation due à un balourd est corrigée par un équilibrage de poids sur le dispositif, et que les deux surfaces d'assemblage à l'état pâteux des zones d'assemblage des deux côtés ainsi qu'en position de repos et dars une orientation axiale l'une par rapport a l'autre se soudent ensemble.

2. Procédé selon la revendication n° 1, caractensé en ce que les rotations des ceux côtés ces disques de rotor à assembler s'effectuent avec un décalage selon un certain angle circulaire et dans le même sens de rotation.

3. Procédé selon la revendication n° 1, **caractérisé en ce que** la vitesse de rotation et/ou le rayon du cercle de mouvement et/ou les forces de frottement agissant sur les surfaces d'assemblage sont variables en fonction de la taille ou de la masse et du/des matériau(x) des disques de rotor à relier ensemble.

4. Procédé selon la revendication n°1, **caractérisé en ce que** le disque de rotor avec la plus faible masse est mis en mouvement circulaire et un disque de rotor ou plusieurs disques de rotor ayant une masse supérieure et reliés entre eux sont maintenus en position de repos.

5. Procédé selon la revendication n°4, **caractérisé en ce que** la surface d'assemblage effectuant un mouvement circulaire sur la surface d'assemblage au repos est mue avec une vitesse de rotation accrue et/ou selon un rayon plus grand afin d'amplifier le mouvement relatif entre les deux surfaces d'assemblage.

6. Procédé selon la revendication n° 1, **caractérisé en ce que** les disques de rotor sont constitués de matériaux identiques ou, conformément à une charge thermique se modifiant dans des étages successifs de compresseur ou de turbine, des disques de rotor constitués de matériaux différents sont soudés ensemble.

7. Procédé selon la revendication n° 6, **caractérisé en ce que** des disques de rotor constitués d'alliages à base de nickel, de titane ou de fer sont soudés ensemble.
